# EUROPÄISCHE PATENTANMELDUNG

(11) **EP 1 742 014 A2**
(43) Veröffentlichungstag der Anmeldung: **10.01.2007**
(21) Anmeldenummer: 06115100.7
(22) Anmeldetag: 07.06.2006
(51) Int. Cl.: G01B 11/12

(54) **Haltevorrichtung und optische Messanordnung für eine aus einem Gitter aufgebaute Röhre**

(30) Priorität: 04.07.2005 DE 102005031121
(71) Anmelder: SIEMENS AKTIENGESELLSCHAFT, 80333 München (DE)
(72) Erfinder: Brunner, Peter, 80992, München (DE); Schick, Anton, 84149, Velden (DE)

(57) **Zusammenfassung**

Die Erfindung schafft eine Haltevorrichtung (100) für eine aus einem Gitter aufgebaute Röhre (160) mit einem Grundkörper (105), einem an dem Grundkörper (105) angeordneten länglichen Aufnahmeelement (110), auf welches die Röhre (160) aufschiebbar ist und einem Drehantrieb (127) zum Drehen der auf das Aufnahmeelement (110) aufgeschobenen Röhre (160) um ihre Längsachse. Erfindungsgemäß ist das Aufnahmeelement (110) derart ausgebildet, dass ein Beleuchtungslicht (192) eines konfokalen Abstandssensors (170), welches einen ersten Teilbereich der Röhrenwand zumindest teilweise durchdringt und auf einen zweiten Teilbereich der Röhrenwand fokussiert ist, das Aufnahmeelement (110) durchdringt. Das Aufnahmeelement (110) kann eine Aussparung (115) aufweisen oder es kann aus einem optisch transparenten Material gefertigt sein, so dass das Beleuchtungslicht (192) störungsfrei das Aufnahmeelement (110) durchdringt. Die Erfindung schafft ferner eine optische Messanordnung, welche neben der oben beschriebenen Haltevorrichtung (100) zusätzlich einen konfokalen Abstandssensor (170) aufweist, wobei die Haltevorrichtung (100) relativ zu dem Abstandssensor (170) derart angeordnet ist, dass das Beleuchtungslicht (192) einen ersten Teilbereich der Röhrenwand zumindest teilweise durchdringt und dass sich ein zweiter Teilbereich innerhalb eines Objektbereiches des konfokalen Abstandssensors (170) befindet.

## Beschreibung

Die Erfindung betrifft eine Haltevorrichtung sowie eine optische Messanordnung für eine aus einem Gitter aufgebaute Röhre, insbesondere zum dreidimensionalen Vermessen der Innenstruktur der gitterartigen Röhrenwand mittels bzw. mit einem konfokalen Abstandssensor.

Gefäßerkrankungen, welche insbesondere in der heutigen Wohlstandsgesellschaft weit verbreitet sind, können unter bestimmten Umständen zu einem vollständigen Verschluss des jeweiligen Blutgefäßes führen. Das durch die jeweilige Blutbahn zu versorgende Gewebe kann dabei irreversibel geschädigt werden und, sofern dieses Gewebe für den menschlichen Organismus lebenswichtig ist, sogar zum Tod des Patienten führen. Um an ausgezeichneten Stellen Gefäßverengungen zu verhindern, hat die Medizin endoluminale Gefäßprothesen entwickelt, welche durch einen operativen Eingriff in die von einer Verengung bedrohte Stelle des Blutgefäßes eingesetzt werden. Die endoluminalen Gefäßprothesen sind üblicherweise aus einer Gitterstruktur aufgebaute metallische Röhrchen, die eine gewisse Flexibilität aufweisen und somit auch an Stellen des menschlichen Körpers eingesetzt werden können, an denen das jeweilige Blutgefäß eine Krümmung aufweist. Diese Krümmung kann abhängig von der jeweiligen Körperhaltung unterschiedlich stark sein. Eine endoluminale Gefäßprothese wird üblicherweise als Stent bezeichnet.

Da bei fehlerhaften Stents das Leben von Patienten gefährdet ist, werden an die Qualitätskontrolle von Stents sehr hohe Anforderungen gestellt. Fehler wie Materialschwächungen, Materialbrüche, Unebenheiten im Gittermaterial und dergleichen müssen zuverlässig erkannt werden.

Zur Inspektion von Stents werden optische Meßsysteme verwendet, welche die äußere Oberfläche der Stents mittels einer zweidimensionalen Bildaufnahme und/oder einer dreidimensionalen Erfassung der äußeren Oberfläche überprüfen.

Zur hochgenauen dreidimensionalen Vermessung von kleinen Objekten ist aus der DE 196 084 68 C2 ein optischer Abstandssensor bekannt, welcher auf dem konfokalen optischen Abbildungsprinzip beruht. Ein derartiger Abstandssensor, der beispielsweise in Figur 7 der genannten Druckschrift dargestellt ist, umfasst eine punktförmige Lichtquelle und einen punktförmigen Empfänger. Die punktförmige Lichtquelle wird auf einer Oberfläche eines Messobjekts abgebildet. Der punktförmige Empfänger ist konfokal zur punktförmigen Lichtquelle im bildseitigen Messbereich angeordnet. Der Abstandssensor zeichnet sich objektseitig durch eine koaxiale Führung von Beleuchtungs- und Messlicht aus. Die optische Wegstrecke zwischen dem punktförmigen Empfänger und dem Messobjekt ist durch den Einsatz eines schwingenden Spiegelsystems variierbar. Durch eine Bestimmung der maximalen von dem Empfänger gemessenen Lichtintensität als Funktion der Position des schwingenden Spiegelsystems kann die Höhenlage des jeweiligen Messpunktes auf der Oberfläche des Messobjekts bestimmt werden.

Der Erfindung liegen die Aufgaben zugrunde, eine Haltevorrichtung und eine optische Messanordnung zu schaffen, welche eine präzise dreidimensionale Vermessung der Innenstruktur eines Stents ermöglichen.

Diese Aufgabe wird gelöst durch eine Haltevorrichtung für eine aus einem Gitter aufgebaute Röhre mit den Merkmalen des unabhängigen Anspruchs 1. Die erfindungsgemäße Haltevorrichtung umfasst einen Grundkörper, ein an dem Grundkörper angeordnetes längliches Aufnahmeelement für die Röhre, auf welche die Röhre aufschiebbar ist, und einen Drehantrieb zum Drehen der auf das Aufnahmeelement aufgeschobenen Röhre um ihre Längsachse. Erfindungsgemäß ist das Aufnahmeelement derart ausgebildet, dass ein Beleuchtungslicht eines konfokalen Abstandssensors, welches Beleuchtungslicht einen ersten Teilbereich der Röhrenwand zumindest teilweise durchdringt und auf einen zweiten Teilbereich der Röhrenwand fokussiert ist, das Aufnahmeelement ohne eine größere Schwächung der Lichtintensität durchdringen kann. Die beiden genannten Teilbereiche der Röhrenwand befinden sich im Allgemeinen in Bezug auf die Mittelachse der Röhre auf gegenüberliegenden Seiten der Röhre. Da das Lichtbündel des Beleuchtungslichts, insbesondere bei einer hohen numerischen Apertur, beim Durchdringen des ersten Teilbereiches noch nicht stark fokussiert ist, stellt die nicht vollständig zu vermeidende Streuung des Beleuchtungslichts durch die Gitterstruktur im ersten Teilbereich keine Beeinträchtigung für die Inspektion der Röhreninnenwand im zweiten Teilbereich dar. Durch eine Drehung der Röhre kann die Röhreninnenwand entlang eines Umfangskreises auf der Röhren-Mantelfläche sequentiell abgetastet werden, so dass sich die Erfindung insbesondere für im Medizinbereich verwendete Stents eignet.

Die Haltevorrichtung nach Anspruch 2 hat den Vorteil, dass der sich verjüngende Endabschnitt, welcher beispielsweise eine konische Spitze eines nadelförmigen Aufnahmeelements ist, ein einfaches manuelles Auffädeln der Röhre ermöglicht.

Gemäß Anspruch 3 ermöglicht eine Aussparung in dem Aufnahmeelement das Durchdringen des Beleuchtungslichts. Im Falle eines metallischen Aufnahmeelements wird die Aussparung bevorzugt mittels Erodieren freigelegt, so dass selbst bei den üblicherweise sehr kleinen Abmessungen des Aufnahmeelements eine präzise Formgebung der Aussparung auf einfache Weise realisiert werden kann.

Gemäß Anspruch 4 ist die Aussparung eine keilförmige Öffnung, welche bevorzugt gerade so groß ist, dass das Beleuchtungslicht ungehindert den zweiten Teilbereich der Röhrenwand erreichen kann. Eine keilförmige Aussparung hat zudem den Vorteil, dass die Aussparung optimal an den sich verjüngenden Kegel des Beleuchtungslichts angepasst werden kann. Zudem kann eine keilförmige Aussparung auf einfache Weise in dem Aufnahmeelement erzeugt werden, ohne dass die Stabilität des Aufnahmeelements durch ein zu großes Volumen der Aussparung reduziert wird.

Gemäß Anspruch 5 ist das Aufnahmeelement stationär an dem Grundkörper angebracht und der Drehantrieb weist ein Reibelement auf, welches an der Außenfläche der Röhre angreift. Dies bedeutet, dass die zu vermessende Röhre auf dem stationären Aufnahmeelement gedreht wird. Dabei wird das Material des Aufnahmeelements bevorzugt so gewählt, dass zwischen dem Aufnahmeelement und der zu untersuchenden Röhre nur geringe Reibungskräfte auftreten, so dass im Ergebnis ein zu vernachlässigender Abrieb zwischen dem zu vermessenden Objekt und dem Aufnahmeelement auftritt. Das Reibelement ist bevorzugt ein Reibrad, welches beispielsweise durch eine Feder an die zu vermessende Röhre gedrückt wird. Bevorzugt greift das Reibelement an dem zweiten Teilbereich der Röhre an, so dass die zu vermessende Innenfläche des Messobjekts definiert an dem Aufnahmeelement anliegt und somit ein genauer Arbeitsabstand zum Abstandssensor gewährleistet ist. Verformungen der zu vermessenden Röhre werden auf diese Weise während des Messvorgangs aufgehoben, so dass auch flexible Messobjekte mit hoher Genauigkeit untersucht werden können.

Gemäß Anspruch 6 ist das Aufnahmeelement zumindest teilweise aus einem optisch transparenten Material hergestellt. Dies hat den Vorteil, dass das Aufnahmeelement keine Aussparung aufweisen muss, durch welche das Beleuchtungslicht das Aufnahmeelement durchdringt. Vielmehr kann das Aufnahmeelement ein stabiler massiver Körper sein, auf welchem die zu vermessende Röhre mit einer geringen mechanischen Toleranz geschoben wird. Auf diese Weise werden sämtliche Teilbereich der Röhre in einer exakten räumlichen Position gehalten, was insbesondere dann vorteilhaft ist, wenn die Röhre aus einem flexiblen Material hergestellt ist und durch die exakte räumliche Position der Röhrenwand eine präzise dreidimensionale Vermessung möglich ist.

Es wird darauf hingewiesen, dass die exakte räumliche Positionierung der gesamten Röhrenwand auf einfache Weise auch eine exakte Vermessung der Außenstruktur der gitterartigen Röhre mittels eines konfokalen Abstandssensors ermöglicht.

Gemäß Anspruch 7 ist das Aufnahmeelement relativ zu dem Grundkörper drehbar gelagert. Dies ermöglicht eine Vermessung der Innenwand der Röhre durch eine einfache Drehung des Aufnahmeelements. Dabei ist keine Relativbewegung zwischen der zu vermessenden Röhre und dem Aufnahmeelement erforderlich, so dass die Vermessung der Röhren-Innenstruktur entlang eines Umfangskreises auf der Röhren-Mantelfläche ohne jeglichen unerwünschten Abrieb am Aufnahmeelement und/oder an der Röhre durchgeführt werden kann.

Gemäß Anspruch 8 weist die Haltevorrichtung zusätzlich einen Flüssigkeitsbehälter zum Aufnehmen einer das Aufnahmeelement umgebenden Immersionsflüssigkeit auf. Die Immersionsflüssigkeit lagert sich somit sowohl außerhalb auch innerhalb der gitterartigen Röhre an. Sofern das transparente Material des Aufnahmeelements und die Flüssigkeit den gleichen optischen Brechungsindex aufweisen, können auf dese Weise unerwünschte Reflexionen an der Oberfläche des Aufnahmeelements vermieden und die effektive Lichtstärke und damit auch die maximal mögliche Messgeschwindigkeit erheblich erhöht werden. Sofern das transparente Material des Aufnahmeelements Glas ist, eignet sich als Immersionsflüssigkeit insbesondere Glyzerin.

Bei der Verwendung einer Immersionsflüssigkeit ist zu beachten, dass der Arbeitsabstand zwischen der zu vermessenden Röhre und dem Objektiv des konfokalen Abstandssensors auf eine vordefinierte Flüssigkeitstiefe korrigiert wird und somit die Refraktionseigenschaften der Immersionsflüssigkeit und des Aufnahmeelements bei der Wahl des Arbeitsabstandes berücksichtigt werden. Ein Reibelement, welches an der Außenseite der zu vermessenden Röhre angreift, ist in diesem Fall nicht erforderlich.

Die zweite der Erfindung zugrunde liegende Aufgabe wird gelöst durch eine optische Messanordnung mit den Merkmalen des unabhängigen Anspruchs 9. Die optische Messanordnung weist einen konfokalen Abstandssensor auf. Dieser umfasst ein punktförmiges optisches Sendeelement, eingerichtet zum Aussenden von Beleuchtungslicht, eine Abbildungsoptik zum Fokussieren des Beleuchtungslichts in einen Objektbereich, ein punktförmiges optisches Empfangselement, welches in Bezug auf die Abbildungsoptik konfokal zu dem optischen Sendeelement angeordnet ist und welches zum Empfang von Messlicht eingerichtet ist. Das Messlicht ist dabei das Licht, welches an einer im Objektbereich befindlichen Innenwand der Röhre zumindest teilweise zurückgestreut und über die Abbildungsoptik auf das Empfangselement gelenkt wird. Der Abstandssensor umfasst ferner eine Verschiebeeinrichtung zum Variieren des optischen Weges zwischen der Abbildungsoptik und dem optischen Sendeelement. Die erfindungsgemäße optische Messanordnung umfasst ferner eine Haltevorrichtung nach einem der Ansprüche 1 bis 8, wobei die Haltevorrichtung relativ zu dem konfokalen Abstandssensor derart angeordnet ist, dass das Beleuchtungslicht einen ersten Teilbereich der Röhrenwand zumindest teilweise durchdringt und dass sich ein zweiter Teilbereich der Röhrenwand innerhalb des Objektbereiches befindet.

Der Erfindung liegt die Erkenntnis zugrunde, dass bei einer Fokussierung des Beleuchtungslichtes auf die Innenwand des zweiten Teilbereiches der Röhrenwand die Innenstruktur der Röhre vermessen werden kann. Eine teilweise Streuung des Beleuchtungslichts durch den ersten Teilbereich der gitterartigen Röhrenwand beim Eintritt des Beleuchtungslichts in das Innere der zu vermessenden Röhre beeinträchtigt die Messqualität nicht. Dies liegt daran, dass beim Eintritt in das Innere der Röhre durch den ersten Teilbereich das Beleuchtungslicht noch nicht fokussiert ist und damit der Beleuchtungsstrahl einen großen Querschnitt aufweist, so dass die vereinzelte Streuung an der gitterartigen Röhrenwand einen zu vernachlässigenden Einfluss auf die für die konfokale Messung effektiv verwendete Lichtintensität hat.

Die Höhenposition des jeweiligen Messpunktes ergibt sich durch eine Auswertung des durch das Empfangselement gemessenen Intensitätsverlaufs als Funktion des Abstandes zwischen der Abbildungsoptik und dem optischen Sendeelement, bei der das Intensitätsmaximum gemessen wird.

Es wird darauf hingewiesen, dass das Sendeelement und das Empfangselement mittels eines einzigen optischen Elements, beispielsweise dem Ende einer Licht leitenden Faser realisiert werden können, so dass das Sendeelement und das Empfangselement effektiv an derselben Stelle angeordnet sind. Eine optische Kopplung mit einer Lichtquelle sowie mit einem Lichtdetektor erfolgt auf bekannte Weise durch eine Aufspaltung des anderen Endes der Licht leitenden Faser in zwei unterschiedliche Teilenden oder durch einen Strahlteiler, über den sowohl eine Lichtquelle als auch ein Lichtdetektor mit dem anderen Ende der Licht leitenden Faser gekoppelt ist.

Die Verschiebeeinrichtung kann das Objektiv, das optische Sende- bzw. Empfangselement und/oder einen zwischen Objektiv und optischen Sende- bzw. Empfangselement angeordneten Reflektor bewegen. Um eine hohe Abtastgeschwindigkeit zu erreichen, sollte die Verschiebeeinrichtung eine möglichst schnelle Variation des optischen Weges erlauben. So kann die Verschiebeeinrichtung beispielsweise eine mit einer vorgegebenen Frequenz angetriebene Stimmgabel sein, an deren Schenkel die beweglichen Komponenten des konfokalen Abstandssensors angebracht sind. Dies ermöglicht eine besonderes schnelle periodische Variation des optischen Weges zwischen Abbildungsoptik und optischen Sendeelement und erlaubt damit eine besonders schnelle Abstandsmessung.

Gemäß Anspruch 10 weist die optische Messanordnung zusätzlich eine Positioniereinrichtung auf, mittels welcher das Aufnahmeelement relativ zu dem konfokalen Abstandssensor entlang der Längserstreckung des Aufnahmeelements verschiebbar ist. Durch ein longitudinales Verfahren der Röhre kann in Verbindung mit einer Drehbewegung der Röhre jeder Punkt auf der Innenseite der Röhre vermessen und somit die komplette innere Oberfläche der Röhre dreidimensional vermessen und auf gegebenenfalls vorhandene Defekte überprüft werden.

Gemäß Anspruch 11 ist der konfokale Abstandssensor ein mehrkanaliger Abstandssensor, mit dem gleichzeitig mehrere auf einer Messzeile liegende Messpunkte vermessen werden können. Das Sendeelement ist in diesem Fall bevorzugt eine aus mehreren Punktlichtquellen bestehende Lichtzeile und das Empfangselement ist bevorzugt ein Zeilensensor, wobei jeder Punktlichtquelle jeweils ein Pixel des Zeilensensors zugeordnet ist. Auf diese Weise kann eine besonders schnelle Vermessung der Innenstruktur der Röhre realisiert werden, ohne dass die Genauigkeit der Messungen reduziert ist. Selbstverständlich können die Punktlichtquellen und/oder die punktförmigen Empfangselemente durch jeweils eine Lochblende realisiert werden.

Weitere Vorteile und Merkmale der vorliegenden Erfindung ergeben sich aus der folgenden beispielhaften Beschreibung derzeit bevorzugter Ausführungsformen.

In der Zeichnung zeigen in schematischen Darstellungen
- Figur 1a: eine optische Messanordnung für eine aus einem Gitter aufgebaute Röhre mit einem konfokalen Abstandssensor und einer Haltevorrichtung mit einer stationären Aufnahmenadel in einer Seitenansicht,
- Figur 1b: die in Figur 1a dargestellte Haltevorrichtung in einer Querschnittsansicht,
- Figur 2a: eine Haltevorrichtung mit einer drehbar gelagerten optisch transparenten Aufnahmenadel in einer Immersionsflüssigkeit und
- Figur 2b: eine Haltevorrichtung mit einer drehbar gelagerten Aufnahmenadel in einer Immersionsflüssigkeit, wobei sich die Immersionsflüssigkeit bis an das Objektiv eines konfokalen Abstandssensors erstreckt.

An dieser Stelle bleibt anzumerken, dass sich in der Zeichnung die Bezugszeichen von gleichen oder von einander entsprechenden Komponenten lediglich in ihrer ersten Ziffer unterscheiden.

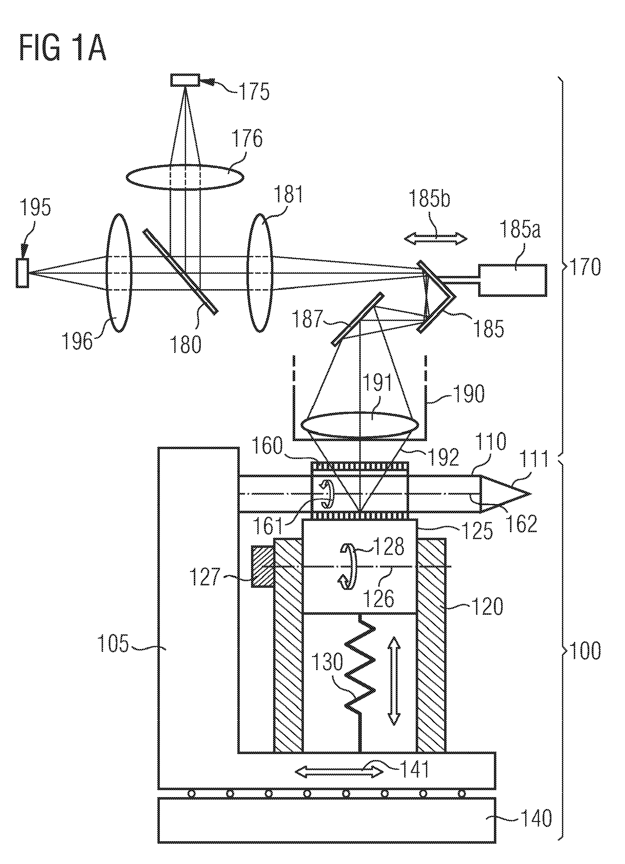

Die in Figur 1a dargestellte Messvorrichtung umfasst einen konfokalen Abstandssensor 170 und eine Haltevorrichtung 100 für einen Stent 160. Im folgenden wird zunächst der konfokale Abstandssensor 170 kurz erläutert. Nähere Einzelheiten über den konfokalen Abstandssensor 170 finden sich in der aus dem Stand der Technik bekannten Druckschrift DE 196 084 68 C2.

Der konfokale Abstandssensor 170 weist eine zumindest annähernd punktförmige Lichtquelle 175 auf. Die geringe flächige Ausdehnung der Lichtquelle 175 kann auch durch eine entsprechend große Lochblende vor der Lichtquelle realisiert werden. Das von der punktförmigen Lichtquelle 175 ausgesandte Licht trifft auf eine Optik 176, welche das Beleuchtungslicht als paralleles Strahlenbündel auf einen Strahlteiler 180 richtet. An dem Strahlteiler 180 wird das Beleuchtungslicht reflektiert und über eine Optik 180, einen Retroreflektor 185 und einen Umlenkspiegel 187 auf ein objektseitiges Objektiv 191 gerichtet. Das Objektiv 191 weist bevorzugt eine sehr geringe Brennweite auf, so dass das Beleuchtungslicht 192 mit einer großen numerischen Apertur auf die innere Oberfläche des Stents 160 fokussiert wird. Dabei durchdringt das Beleuchtungslicht 192 den in Figur 1a dargestellten oberen Teil des Stents 160, wobei infolge des in dem oberen Bereich des Stents 160 aufgeweiteten Strahls des Beleuchtungslichts 192 die gitterförmige Struktur des Stents 160 das Beleuchtungslicht 192 nur unwesentlich schwächt. Das Objektiv 191 des konfokalen Abstandssensors 170 befindet sich in einem Tubus 190, welcher die untere Begrenzung des konfokalen Abstandssensors 170 darstellt.

Das an der Oberfläche des unteren Teilbereiches des Stents 160 zumindest teilweise zurück gestreute Licht, welches im folgenden als Messlicht bezeichnet wird, wird von dem Objektiv 191 eingesammelt und über den Umlenkspiegel 187, den Retroreflektor 185, und die Optik 181 auf den Strahlteiler 180 gerichtet. Das Messlicht wird durch den Strahlteiler 180 zumindest teilweise transmittiert, so dass es über eine Optik 196 auf den punktförmigen Lichtdetektor 195 trifft. Der punktförmige Lichtdetektor 165 kann ebenso mittels einer kleinen Lochblende, welche sich vor einem gegebenenfalls flächigen Lichtdetektor befindet, realisiert werden.

Das konfokale Messprinzip zur Bestimmung von Höhenpositionen besteht nun darin, dass die von dem punktförmigen Lichtdetektor 195 gemessene Intensität davon abhängt, mit welchem Fokusdurchmesser das Beleuchtungslicht 192 auf die zu vermessende Oberfläche des Stents 160 fokussiert wird. Zu diesem Zweck ist der Retroreflektor 185 über eine Verschiebeeinrichtung 185a entlang einer Verschieberichtung 185b periodisch verschiebbar, so dass der Fokusdurchmesser auf den unteren Teilbereich des Stents mit einer periodischen Bewegung des Retroreflektors 185 variiert werden kann. Die von dem punktförmigen Lichtdetektor 195 erfasste Rückstreuintensität ist dann maximal, wenn das Beleuchtungslicht 195 auf die zu vermessende Oberfläche des Stents 160 mit einem minimalen Fokusdurchmesser trifft. Falls die zu vermessende Oberfläche Unebenheiten aufweist, kann aus der jeweiligen Position des Retroreflektors 185, bei der der Lichtdetektor 195 eine maximale Intensität misst, die jeweilige Höhenposition des Messpunktes ermittelt werden.

Im folgenden wird die Haltevorrichtung 100 näher erläutert. Die Haltevorrichtung 100 ist relativ zu dem Tubus 190 des konfokalen Abstandssensors 170 derart angeordnet, dass der untere Teilbereich des Stents 160 gerade in dem durch die Fokuslage des Beleuchtungslichts 192 ausgezeichneten Objektbereich liegt. Die Haltevorrichtung 100 umfasst ein Grundelement 105, an welchem eine Aufnahmenadel 110 angebracht ist.

Die Aufnahmenadel 110 weist eine Nadelspitze 111 auf, so dass der Stent 160 auf einfache Weise auf die als Aufnahmeelement dienende Aufnahmenadel 110 aufgeschoben werden kann. Die Aufnahmenadel 110 weist eine in Figur 1a nicht dargestellte Aussparung auf, durch welche des Beleuchtungslicht 192 bis hin zu dem zu vermessenden unteren Teilbereich des Stents 160 dringen kann. Um eine vollständige Vermessung der Innenstruktur des Stents 160 zu ermöglichen, ist ein Reibrad 125 vorgesehen, welches um eine Drehachse 126 mittels eines Drehantriebs 127 entlang einer Drehrichtung 128 drehbar ist und welches an der Außenwand des unteren Teilbereichs des Stents 160 angreift. Um einen guten mechanischen Kontakt zwischen dem Reibrad 125 und dem Stent 160 zu gewährleisten, wird das Reibrad 125, welches an einer Halterung 120 gelagert ist, über ein Federelement 130 mit einer vorgegebenen Kraft gegen den Stent 160 gedrückt. Durch eine Rotation des Stents 160 in einer Drehrichtung 161 um eine Drehachse 162, welche parallel zu der stationären Aufnahmenadel 110 orientiert ist, kann somit die Innenwand des Stents 160 entlang eines Umfangskreises auf der Stent-Mantelfläche sequentiell abgetastet werden.

Eine vollständige Abtastung der Innenstruktur des Stents 160 erfordert zusätzlich zu der Drehung des Stents 160 auch eine Verschiebung des Stents 160 relativ zu dem konfokalen Abstandssensor 170 entlang der Längsachse der Aufnahmenadel 110. Deshalb ist eine Positioniereinrichtung 140 vorgesehen, mit der das Grundelement 105 relativ zu dem konfokalen Abstandssensor 170 entlang einer Positionierrichtung 141 bewegt werden kann. Somit ist durch eine Überlagerung einer Verschiebebewegung entlang der Positionierrichtung 141 und einer Drehbewegung entlang einer Drehrichtung 161 eine vollflächige Abtastung der Innenstruktur des Stents 160 möglich.

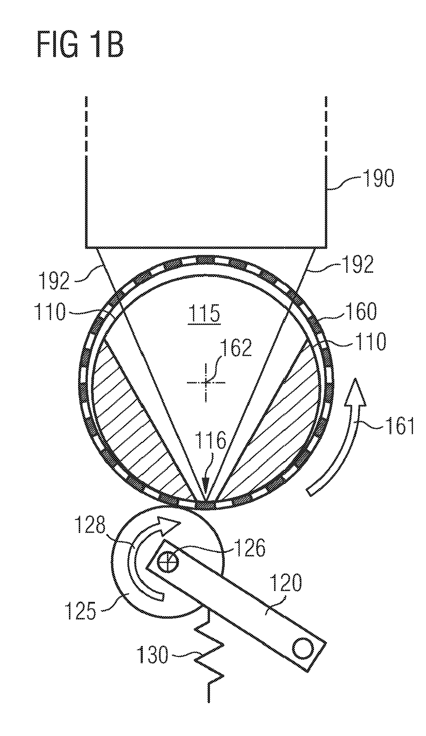

Figur 1b zeigt die Aufnahme und die Drehung des Stents 160 in einer vergrößerten Querschnittsansicht. Die Aufnahmenadel 110 weist eine keilförmige Aussparung 115 auf, welche in einen Durchgangsspalt 116 mündet, so dass das Beleuchtungslicht 192 nach dem Durchtritt durch den oberen Teilbereich des Stents 160 ungehindert auf die innere Oberfläche des unteren Teilbereichs fokussiert werden kann.

Um eine geringe Reibung zwischen dem Stent 160 und der stationären Aufnahmenadel 110 zu gewährleisten, ist der Durchmesser der Aufnahmenadel 110 etwas kleiner als der Durchmesser des Stents 160 gewählt, so dass der Stent 160 lediglich in der Nähe des Durchgangsspalts 116 an der Aufnahmenadel 110 anliegt. Das Andrücken des Stents 160 an den unteren Teil der Aufnahmenadel 110 hat den Vorteil, dass sich die zu vermessende Oberfläche stets in einer genau definierten räumlichen Position befindet und somit eine präzise Inspektion der Innenstruktur des Stents 160 möglich ist.

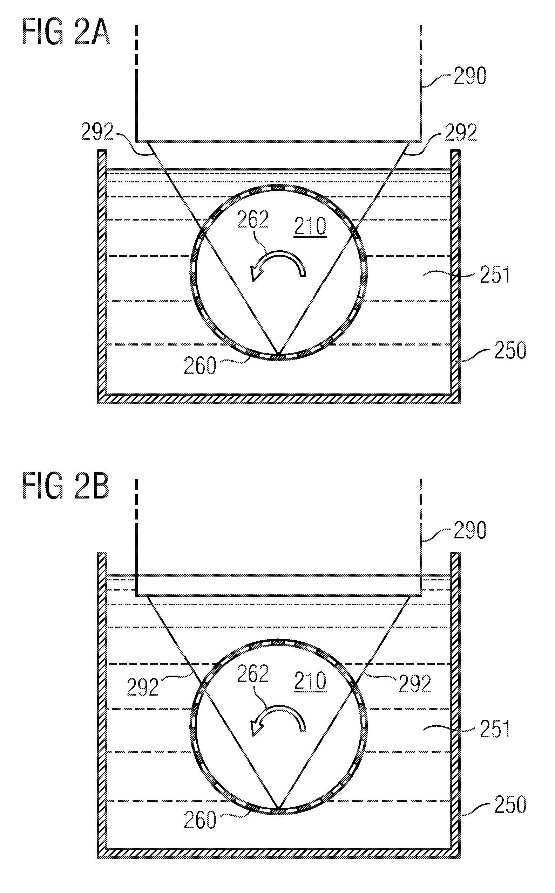

Figur 2a und 2b zeigen die Vermessung der Innenstruktur eines Stents 260, welcher auf einer aus einem transparenten Glas hergestellten Aufnahmenadel 210 aufgeschoben ist. Die Aufnahmenadel 210 befindet sich in einem Flüssigkeitsbehälter 250, welcher mit einer Immersionsflüssigkeit 251 gefüllt ist, die ungefähr den gleichen optischen Brechungsindex wie das Glasmaterial der Aufnahmenadel 210 aufweist. Aufgrund des optisch transparenten Glasmaterials ist keine Aussparung in der Aufnahmenadel 210 erforderlich, damit das Beleuchtungslicht 292 die Aufnahmenadel 210 durchdringen kann. Um eine präzise Vermessung des Stents 260 zu gewährleisten, ist der Durchmesser der Aufnahmenadel 210 im Vergleich zu dem Innendurchmesser des Stents 260 so gewählt, dass sich der Stent 260 spielfrei auf der Aufnahmenadel 210 befindet. Durch eine Drehung der Aufnahmenadel 210 zusammen mit dem Stent 260 entlang einer Drehrichtung 262 können somit in entsprechender Weise sequentiell Messpunkte an der Innenwand des Stents 260 abgetastet werden. Die Messpunkte befinden sich dabei auf einem Umfangskreis auf der Stent-Mantelfläche. Für eine vollständige Vermessung der Innenstruktur des Stents 260 ist zudem eine in den Figuren 2a und 2b nicht dargestellte Positioniereinrichtung vorgesehen, welche die Aufnahmenadel 210 zusammen mit dem Stent 260 relativ zu dem Tubus 290 des konfokalen Abstandssensors senkrecht zur Zeichenebene verschiebt.

Der Einsatz der Immersionsflüssigkeit 251 hat den Vorteil, dass unerwünschte Reflexionen an der Oberfläche des Aufnahmeelements reduziert werden und somit die effektiv zur Verfügung stehende Lichtstärke erhöht wird. Dies trägt dazu bei, dass der Messvorgang mit einer im Vergleich zu einer Anordnung ohne Immersionsflüssigkeit 251, welche selbstverständlich ebenfalls möglich wäre, die Messgeschwindigkeit erhöht werden kann.

Die beiden in Figur 2a und 2b dargestellten Ausführungsformen unterscheiden sich lediglich dadurch, dass gemäß Figur 2a das aus dem Tubus 290 austretende Beleuchtungslicht 292 über eine Luftschicht in die Immersionsflüssigkeit 251 dringt, wo hingegen gemäß Figur 2b der Tubus 290 so weit in den Flüssigkeitsbehälter 250 abgesenkt ist, dass das Beleuchtungslicht 292, welches aus dem Tubus 290 austritt, unmittelbar in die Immersionsflüssigkeit 251 eindringt.

Zusammenfassend kann festgestellt werden: Die Erfindung schafft eine Haltevorrichtung 100 für eine aus einem Gitter aufgebaute Röhre 160 mit einem Grundkörper 105, einem an dem Grundkörper 105 angeordneten länglichen Aufnahmeelement 110, auf welches die Röhre 160 aufschiebbar ist und einem Drehantrieb 127 zum Drehen der auf das Aufnahmeelement 110 aufgeschobenen Röhre 160 um ihre Längsachse. Erfindungsgemäß ist das Aufnahmeelement 110 derart ausgebildet, dass ein Beleuchtungslicht 192 eines konfokalen Abstandssensors 170, welches einen ersten Teilbereich der Röhrenwand zumindest teilweise durchdringt und auf einen zweiten Teilbereich der Röhrenwand fokussiert ist, das Aufnahmeelement 110 durchdringt. Das Aufnahmeelement 110 kann eine Aussparung 115 aufweisen oder es kann aus einem optisch transparenten Material gefertigt sein, so dass das Beleuchtungslicht 192 störungsfrei das Aufnahmeelement 110 durchdringt. Die Erfindung schafft ferner eine optische Messanordnung, welche neben der oben beschriebenen Haltevorrichtung 100 zusätzlich einen konfokalen Abstandssensor 170 aufweist, wobei die Haltevorrichtung 100 relativ zu dem Abstandssensor 170 derart angeordnet ist, dass das Beleuchtungslicht 192 einen ersten Teilbereich der Röhrenwand zumindest teilweise durchdringt und dass sich ein zweiter Teilbereich innerhalb eines Objektbereiches des konfokalen Abstandssensors 170 befindet.

### Bezugszeichenliste

- 100: Haltevorrichtung
- 105: Grundelement
- 110: Aufnahmenadel
- 111: Nadelspitze
- 115: keilförmige Aussparung
- 116: Durchgangsspalt
- 120: Halterung
- 125: Reibrad
- 126: Drehachse
- 127: Drehantrieb
- 128: Drehrichtung
- 130: Federelement
- 140: Positioniereinrichtung
- 141: Positionierrichtung
- 160: Stent
- 161: Drehrichtung
- 162: Drehachse

- 170: konfokaler Abstandssensor
- 175: punktförmige Lichtquelle
- 176: Optik
- 180: Strahlteiler
- 181: Optik
- 185: Retroreflektor
- 185a: Verschiebeeinrichtung
- 185b: Verschieberichtung
- 187: Umlenkspiegel
- 190: Tubus
- 191: Objektiv
- 192: Beleuchtungslicht
- 195: punktförmiger Lichtdetektor
- 196: Optik
- 210: Aufnahmenadel
- 250: Flüssigkeitsbehälter
- 251: Immersionsflüssigkeit
- 260: Stent
- 262: Drehrichtung
- 290: Tubus
- 292: Beleuchtungslicht

## Patentansprüche

1. Haltevorrichtung für eine aus einem Gitter aufgebaute Röhre (160), insbesondere zum dreidimensionalen Vermessen der Innenstruktur der gitterartigen Röhrenwand mittels eines konfokalen Abstandssensors (170), mit
• einem Grundkörper (105),
• einem an dem Grundkörper (105) angeordneten länglichen Aufnahmeelement (110) für die Röhre (160), auf welches die Röhre (160) aufschiebbar ist, und
• einem Drehantrieb (127) zum Drehen der auf das Aufnahmeelement (110) aufgeschobenen Röhre (160) um ihre Längsachse,
wobei
das Aufnahmeelement (110) derart ausgebildet ist, dass ein Beleuchtungslicht (192) des konfokalen Abstandssensors (170), welches einen ersten Teilbereich der Röhrenwand zumindest teilweise durchdringt und auf einen zweiten Teilbereich der Röhrenwand fokussiert ist, das Aufnahmeelement (110) durchdringt.

2. Haltevorrichtung nach Anspruch 1, bei der
das Aufnahmeelement (110) einen sich verjüngenden Endabschnitt (111) zum einfachen Aufnehmen der Röhre (160) aufweist.

3. Haltevorrichtung nach einem der Ansprüche 1 bis 2, bei der das Aufnahmeelement (110) eine Aussparung (115) zum Durchdringen des Beleuchtungslichts (192) aufweist.

4. Haltevorrichtung nach Anspruch 3, bei der
die Aussparung eine keilförmige Öffnung (115) ist.

5. Haltevorrichtung nach einem der Ansprüche 3 bis 4, bei der
• das Aufnahmeelement (110) stationär an dem Grundkörper (105) angebracht ist und
• der Drehantrieb (127) ein Reibelement (125) aufweist, welches an der Röhre (160) angreift.

6. Haltevorrichtung nach einem der Ansprüche 1 bis 2, bei der
das Aufnahmeelement (210) zumindest teilweise aus einem optisch transparenten Material hergestellt ist.

7. Haltevorrichtung nach Anspruch 6, bei der
das Aufnahmeelement (210) relativ zu dem Grundkörper drehbar gelagert ist.

8. Haltevorrichtung nach einem der Ansprüche 7 bis 8, zusätzlich mit
einem Flüssigkeitsbehälter (250) zum Aufnehmen einer Immersionsflüssigkeit (251), welcher Flüssigkeitsbehälter (250) das Aufnahmeelement (210) umgibt.

9. Optische Messanordnung für eine aus einem Gitter aufgebaute Röhre, insbesondere zum dreidimensionalen Vermessen der Innenstruktur der gitterartigen Röhrenwand, aufweisend einen konfokalen Abstandssensor (170) mit
• einem punktförmigen optischen Sendeelement (175), eingerichtet zum Aussenden von Beleuchtungslicht (192),
• einer Abbildungsoptik (191) zum Fokussieren des Beleuchtungslichts (192) in einen Objektbereich,
• einem punktförmigen optischen Empfangselement (195),
- welches in Bezug auf die Abbildungsoptik (191) konfokal zu dem optischen Sendeelement (175) angeordnet ist und
- welches zum Empfang von Messlicht eingerichtet ist, welches Messlicht an einer im Objektbereich befindlichen Innenwand der Röhre (160) zumindest teilweise zurückgestreut und über die Abbildungsoptik (191) auf das Empfangselement (195) gelenkt wird, und
• einer Verschiebeeinrichtung (185a) zum Variieren des optischen Weges zwischen der Abbildungsoptik (191) und dem optischen Sendeelement (175), und
ferner aufweisend
eine Haltevorrichtung (100) nach einem der Ansprüche 1 bis 8, wobei
die Haltevorrichtung (100) relativ zu dem konfokalen Abstandssensor (170) derart angeordnet ist,
• dass das Beleuchtungslicht (192) einen ersten Teilbereich der Röhrenwand zumindest teilweise durchdringt und
• dass sich ein zweiter Teilbereich der Röhrenwand innerhalb des Objektbereiches befindet.

10. Optische Messanordnung nach Anspruch 9, zusätzlich mit einer Positioniereinrichtung (141), mittels welcher das Aufnahmeelement (110) relativ zu dem konfokalen Abstandssensor (170) entlang der Längsersteckung des Aufnahmeelements (110) verschiebbar ist.

11. Optische Messanordnung nach einem der Ansprüche 9 bis 10, wobei der konfokale Abstandssensor (170) ein mehrkanaliger Abstandssensor ist, mit dem parallel mehrere auf einer Messzeile liegenden Messpunkte vermessen werden können.
